# EUROPÄISCHE PATENTSCHRIFT

(11) **EP 3 363 621 B1**
(45) Veröffentlichungstag und Bekanntmachung des Hinweises auf die Patenterteilung: **03.05.2023**
(21) Anmeldenummer: 18166334.5
(22) Anmeldetag: 05.11.2015
(51) Int. Cl.: B29C 64/153, B29C 64/393, B29C 64/277, B22F 3/105, B33Y 30/00, B33Y 50/02

(54) **VERFAHREN UND VORRICHTUNG ZUR BELICHTUNGSSTEUERUNG EINER SELEKTIVEN LASERSINTER- ODER LASERSCHMELZVORRICHTUNG**
METHOD AND DEVICE FOR CONTROLLING THE EXPOSURE OF A SELECTIVE LASER SINTERING OR LASER MELTING DEVICE
PROCÉDÉ ET DISPOSITIF POUR COMMANDER L'EXPOSITION D'UN DISPOSITIF DE FRITTAGE OU DE FUSION LASER

(30) Priorität: 12.11.2014 DE 102014016679
(43) Veröffentlichungstag der Anmeldung: 22.08.2018
(62) Teilanmeldung aus: 15801125.4
(73) Patentinhaber: Concept Laser GmbH, 96215 Lichtenfels (DE)
(72) Erfinder: Herzog, Frank, 96215 Lichtenfels (DE); Bechmann, Florian, 96215 Lichtenfels (DE); Lippert, Markus, 96215 Lichtenfels (DE); Hoch, Johanna, 96151 Breitbrunn (DE); Zeulner, Fabian, 96215 Lichtenfels (DE); Tarasov, Alexey, 96215 Lichtenfels (DE)
(74) Vertreter: Hafner & Kohl PartmbB

(56) Entgegenhaltungen:
- JP-A- 2009 006 509
- US-A1- 2003 052 105
- US-A1- 2014 263 209

## Beschreibung

Die Erfindung betrifft ein Verfahren zur Belichtungssteuerung einer selektiven Lasersinter- oder Laserschmelzvorrichtung zum Herstellen von dreidimensionalen Objekten mit den Verfahrensschritten des Oberbegriffes des Anspruches 1. Darüber hinaus betrifft die Erfindung eine Vorrichtung zur Durchführung des Verfahrens nach Patentanspruch 9.

Als Stand der Technik ist es aus DE 10 2014 005 916.2 bereits bekannt, Lasersinter- oder Laserschmelzvorrichtungen, mit welchen dreidimensionale Objekte durch selektives Bestrahlen eines Baumaterials hergestellt werden können, mit einer Mehrzahl von Scannern durchzuführen. Die Scanner sind über einem Baufeld angeordnet und können entweder fest oder beweglich, d.h. über dem Baufeldbereich bereichsweise verfahrbar angeordnet werden.

Bei derartigen Mehr-Scanneranlagen ist entweder jedem Abschnitt eines Baufeldes ein gesonderter Scanner zugeordnet oder die Scanner sind derart angebracht oder ausgebildet, dass sie auch zumindest teilweise Baufeldabschnitte belichten können, die eigentlich einen anderen Scanner zugeordnet sind, um diesen anderen Scanner bei der Belichtung des ihm zugeordneten Baufeldbereiches zu unterstützen, wenn dort der Belichtungsaufwand zeitmäßig oder flächenmäßig deutlich höher ist als in dem benachbarten Baufeldabschnitt, der dann entsprechend weniger zu belichten ist.

Das Dokument US 2014/0263209 A1 offenbart ein Prinzip zum additiven bzw. generativen Herstellen von dreidimensionalen Objekten.

Das Dokument US 2003/052105 A1 offenbart ein Prinzip zum additiven bzw.
generativen Herstellen von dreidimensionalen Objekten. Das Dokument JP 2009 006509 A offenbart ein Verfahren gemäß dem Oberbegriff des Anspruchs 1.

Der vorliegenden Erfindung liegt die Aufgabe zugrunde, ein Verfahren und eine Vorrichtung zur Durchführung dieses Verfahrens anzugeben, das bzw. die eine Optimierung des Bauvorganges und insbesondere eine Verkürzung der erforderlichen Bauzeit für einen Gegenstand ermöglicht. Diese Aufgabe wird durch die Kombination der Merkmale des Anspruches 1 gelöst, vorteilhafte Weiterbildungen des Verfahrens finden sich in den Unteransprüchen 2 - 8.

Im Zuge des Verfahrens nach der Erfindung werden zunächst die Bestrahlungszeiten eines jeden einzelnen Scanners und/oder die durch diesen einzelnen Scanner erfassten Bestrahlungsflächen in einem ersten Schritt gesondert erfasst und abgespeichert. Die Erfassung der Bestrahlungszeiten kann beispielsweise durch ein Shutter-Öffnungssignal ermittelt werden, der Strahlungsenergie von einer Strahlungsquelle durchlässt, es sind aber auch andere Erfassungsmöglichkeiten denkbar, z.B. durch lichtempfindliche Elemente oder dergleichen, die bei einer Aktivierung eines Scanners ein Zeitsignal zur Verfügung stellen, das elektronisch abgespeichert werden kann.

Die Erfassung der Bestrahlungsflächen kann ebenfalls auf unterschiedliche Art und Weise erfolgen, entweder fototechnisch durch Erfassung eines Bestrahlungsbildes in einem bestimmten Zeitabschnitt oder durch Rückgriff auf ermittelte Bestrahlungszeiten und Scannerauslenkungen, so dass bestrahlte Baufeldabschnitte hinsichtlich ihrer bestrahlten Größe ermittelt werden können.

In einem zweiten Schritt werden die erfassten und abgespeicherten Bestrahlungszeitwerte und Bestrahlungsflächenwerte miteinander elektronisch verglichen. Dies kann durch eine Vergleichsvorrichtung geschehen, die in einem entsprechend geeigneten Prozessor oder Rechner integriert ist.

Stellt der Prozessor/Rechner fest, dass die Bestrahlungszeiten oder -flächen voneinander abweichen, dann wird für die nächste Schicht oder für einen nächsten Schichtabschnitt eine Neuaufteilung der durch jeden einzelnen Scanner zu bestrahlenden Oberflächenbereiche einer Pulverschicht derart festgelegt, dass die Bestrahlungszeiten für jeden einzelnen Scanner möglichst aneinander angenähert sind und/oder die Bestrahlungsfläche eines jeden einzelnen Scanners flächenmäßig möglichst weit aneinander angeglichen sind.

Dieses Verfahren wird iterativ durchgeführt, d.h. immer wieder wiederholt, damit auf schnelle Weise entsprechend auf sich während des Bauprozesses ändernde Bestrahlungsgeometrien reagiert werden kann. Die Aufteilung der Scanfelder wird jeweils nach Verfestigung einer oder mehrerer Schichten dynamisch derart angepasst, dass bei jedem nachfolgenden Bestrahlungsdurchgang die sich ergebende Belichtungszeit für jeden Scanner wenigstens annähernd gleich ist. Vor Beginn des Bauvorgangs kann eine Bedienungsperson ausgehend von auslesbaren Steuerdaten der Scanner eine Voreinstellung der Scanfelder für jeden Scanner vornehmen. Natürlich ist es auch möglich, dass eine Bedienungsperson während des Bauvorganges quasi manuell in die iterative Angleichung der Scanzeichen eingreift und ganz bewusst eine Verschiebung der Scanfelder, z.B. aus thermischen Gründen oder dergleichen.

Es sei angeregt, dass das erfindungsgemäße Verfahren auch als "Mischverfahren" durchführbar ist, d. h., dass z. B. Bestrahlungszeiten und Bestrahlungsflächen gemessen werden und z. B. aus den Bestrahlungszeiten eines ersten Scanners auf von diesem bestrahlte Flächen geschlossen wird, die mit den Bestrahlungsflächen eines zweiten Scanners verglichen werden, um die erfindungsgemäße Angleichung zu erreichen.

Die Grenze zwischen den Scanfeldern von zwei Scannern kann eine Gerade sein. Sind über einem Baufeld allerdings mehr als zwei Scanner im Einsatz, kann es vorteilhaft sein, auch andere Grenzverläufe zwischen den Scanfeldern zu wählen.

Falls der Vergleich der Bestrahlungszeiten und/oder Bestrahlungsflächen betreffend einen jeden Scanner keine Verschiebung der Scanfeldgrenzen ergibt, dann ist es sehr vorteilhaft, die Grenze zwischen den Scanfeldern oszillieren zu lassen, um eine Streifenbildung auf der Oberfläche zu vermeiden.

Die erfindungsgemäße Steuerung justiert die Grenze zwischen den Scanfeldern unterschiedlicher Scanner in optimaler Weise ein. Dadurch, dass die Veränderung von Schmelzfläche und Position über einen gesamten Bauvorgang hinweg zwar groß, von Schicht zu Schicht aber meist relativ klein sind, ist die Regelung in der Lage, durch kleine inkrementale Anpassung der Scanfeldgrenze über den gesamten Bauvorgang hinweg die Bauzeit nahe an das theoretische Minimum zu bringen.

Die Erfindung ist anhand vorteilhafter Ausführungsbeispiele in den Zeichnungsfiguren näher erläutert. Diese zeigen
- Fig. 1: eine schematische Darstellung der wesentlichen Komponenten einer Vorrichtung zur Durchführung des Verfahrens;
- Fig. 2: drei Darstellungen zur Scanfeldanpassung, wobei in Fig. 2a eine (erste) Schicht n, in Fig. 2b eine weitere Schicht n+1 und in Fig. 2c eine Schicht n+2 dargestellt ist.

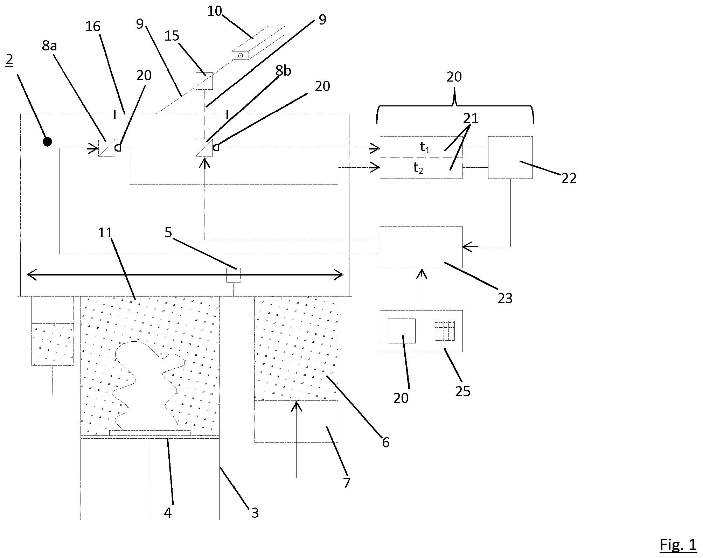

Die in Figur 1 dargestellte Vorrichtung 1 umfasst als wesentliche Komponenten eine Prozesskammer 2, in der ein Baucontainer 3 mit einer höhenverfahrbaren Bauplattform 4 angeordnet ist. Über der Bauplattform 4 ist eine Beschichteranordnung 5 angeordnet, durch welche Baumaterial 6 aus einer Dosierkammer 7 im Bereich des Baucontainers 3 in Form von dünnen Schichten aufgetragen werden kann. Über dem Baucontainer 3 ist in der Prozesskammer 2 eine Mehrzahl von Scannern 8a, 8b angeordnet, durch welche die Strahlung 9 einer Strahlungsquelle 10 in Form eines Lasers prozessgesteuert auf die Baumaterialschicht 11 gelenkt werden kann, um diese selektiv zu verfestigen.

Bei den aufgeführten Komponenten der Vorrichtung handelt es sich nur um die für die Erfindung wesentlichen Komponenten, selbstverständlich umfasst eine derartige Lasersinter- oder Laserschmelzanlage eine Vielzahl weiterer Komponenten, die aber im Rahmen dieser Erfindung nicht erläutert werden müssen.

Die Vorrichtung verfügt weiterhin über eine elektronische Erfassungseinheit 20, über die Bestrahlungszeiten bezogen auf jeden Scanner 8 und/oder bei einem Bestrahlungsschritt durch einen Scanner 8 erfassten Bestrahlungsflächen gesondert erfasst werden können und in einem elektronischen Speicher 21 abgelegt werden können.

An den Speicher 21 ist eine elektronische Vergleichseinrichtung 22 angeschlossen, durch welche die abgespeicherten Bestrahlungszeitenwerte der einzelnen Scanner 8 miteinander verglichen werden können. Mit der Vergleichseinrichtung 22 ist eine Prozessoreinrichtung 23 verbunden, die im Falle von abweichenden Bestrahlungszeitenwerten der einzelnen Scanner 8 eine Neufestlegung der durch jeden einzelnen Scanner 8 zu belichtenden Oberflächenbereiche so berechnet, dass die Bestrahlungszeiten (oder die Bestrahlungsflächen) eines jeden einzelnen Scanners 8 flächenmäßig möglichst weit aneinander angeglichen sind.

Weiterhin ist in Figur 1 noch eine Eingabevorrichtung 25 mit einem Display 26 dargestellt, über die eine Bedienungsperson in den Bauprozess der Lasersinter- oder Laserschmelzvorrichtung 1 eingreifen kann.

Es sei kurz angemerkt, dass die Strahlung 9 der Strahlungsquelle 10 bei dem dargestellten Ausführungsbeispiel über einen Strahlteiler 15 geleitet wird, und von dort ein Fenster 16 im oberen Bereich der Prozesskammer 2 durchsetzt, um zu den Scannern 8a, 8b zu gelangen.

Die Erfassungseinheit 20 umfasst an den Scannern oder diesen vorgeschalteten optischen Schaltern (Shuttern) Sensorelemente, die die Bestrahlungszeiten der Scanner 8 erfassen und als zu vergleichende Bestrahlungszeitenwerte T1 und T2 im Speicher 21 ablegen. Diese Werte werden in der Vergleichseinrichtung 22 miteinander verglichen, um durch den Prozessor eine Ansteuerungsoptimierung der Scanner zu ermöglichen.

Dem Fachmann ist geläufig, dass zum einen die Bestrahlungszeitenerfassung durch eine Bestrahlungsflächenerfassung ersetzt oder ergänzt werden kann, dass der Speicher und der Vergleicher Teil eines elektronischen Systems zum Betrieb der Vorrichtung sein können und in einen Rechner oder Prozessor integriert sein können.

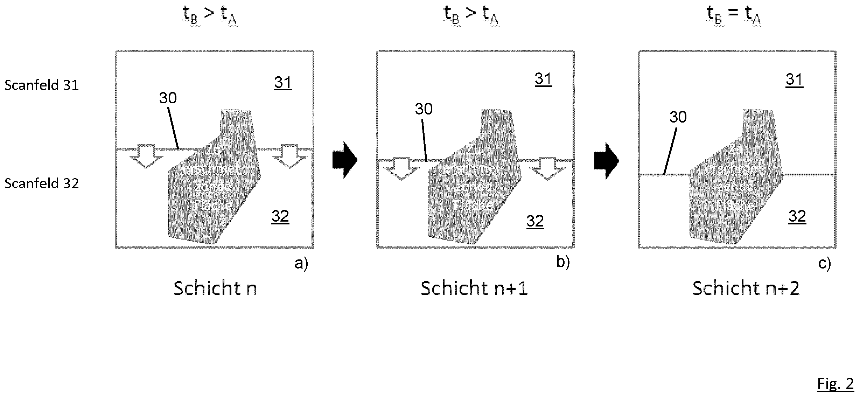

In den Figuren 2a - 2c ist nun näher dargelegt, wie die Optimierung der Scanfelder 31, 32 bzw. Bestrahlungsflächen bezogen auf die einzelnen Scanner 8a, 8b optimiert wird.

In Figur 2a ist zunächst ein Zustand dargestellt, bei dem die zu erschmelzende Fläche des Scanfeldes 32 größer ist als des Scanfeldes 31. Aus diesem Grunde ist es zweckdienlich, die Grenze 30 zwischen dem Scanfeld 31 und dem Scanfeld 32 nach unten zu verschieben, sodass bei der nächsten Schicht n+1 gemäß Figur 2b bereits eine Annäherung der Scanfelder 31, 32 vorgenommen ist.

Dieser Vorgang wird so lange wiederholt, bis tatsächlich die Scanfelder 31 und 32 gleich groß sind, d. h. die Belichtungszeiten t_{A} und t_{b} sind aneinander angeglichen, sodass beide Scanner 8a und 8b zumindest weitgehend gleich ausgelastet sind.

Ergibt die Vergleichsmessung der Bestrahlungszeiten oder Scanfeldgrößen, dass die Grenze 30 zwischen den Scanfeldern nicht verschoben werden muss, weil die Bestrahlungszeiten aneinander angeglichen sind, dann erfolgt eine Oszillation der Grenze 30 zwischen den Scanfeldern 31, 32, um eine Streifenbildung im Bauteil zu vermeiden.

## Patentansprüche

1. Verfahren zur Belichtungssteuerung einer selektiven Lasersinter- oder Laserschmelzvorrichtung zum Herstellen von dreidimensionalen Objekten, mit folgenden Verfahrensschritten:
- Bereitstellung einer selektiven Lasersinter- oder Laserschmelzvorrichtung (1), in welcher dreidimensionale Objekte durch aufeinanderfolgendes Verfestigen von Schichten eines mittels Strahlung verfestigbaren pulverartigen Baumaterials (6) an den dem jeweiligen Querschnitt des Objektes entsprechenden Stellen hergestellt werden können, wobei die bereitgestellte Vorrichtung (1) eine Bestrahlungseinrichtung zum Bestrahlen von Schichten des Baumaterials umfasst, die eine Mehrzahl von gesondert ansteuerbaren, gleichzeitig das Baumaterial bestrahlenden Scannern (8a, 8b) aufweist,
**gekennzeichnet durch folgende Verfahrensschritte**
- gesonderte Erfassung der Bestrahlungszeiten eines jeden einzelnen Scanners (8a, 8b) und/oder der durch jeden einzelnen Scanner (8a, 8b) erfassten Bestrahlungsflächen in einem ersten Schritt und Abspeicherung der erfassten Bestrahlungszeiten und/oder Bestrahlungsflächen;
- Vergleich der Bestrahlungszeiten und/oder Bestrahlungsflächen der einzelnen Scanner (8a, 8b) miteinander;
- Neufestlegung der durch jeden einzelnen Scanner zu bestrahlenden Oberflächenbereiche einer Baumaterialschicht (11) derart, dass die Bestrahlungszeiten für jeden einzelnen Scanner (8a, 8b) möglichst aneinander angenähert sind und/oder die Bestrahlungsflächen eines jeden einzelnen Scanners (8a, 8b) flächenmäßig möglichst weit aneinander angeglichen sind, wobei
das Verfahren iterativ durchgeführt wird.

2. Verfahren nach Anspruch 1, **dadurch gekennzeichnet, dass** die Aufteilung der Scanfelder (31/32) jeweils nach Verfestigung einer oder mehrerer Baumaterialschichten (11) dynamisch derart angepasst wird, dass die beim nachfolgenden Bestrahlungsdurchgang sich ergebende Belichtungszeit für jeden Scanner (8a, 8b) wenigstens annähernd gleich ist.

3. Verfahren nach einem der vorhergehenden Ansprüche, **dadurch gekennzeichnet, dass** eine Bedienungsperson vor Beginn des Bauvorganges ausgehend von auslesbaren Steuerdaten der Scanner (8a, 8b) eine Voreinstellung der Größe der Scanfelder (31, 32) für jeden Scanner vornimmt.

4. Verfahren nach einem der vorhergehenden Ansprüche, **dadurch gekennzeichnet, dass** die Scanfelder (31, 32) für jeden Scanner (8a, 8b) in inkrementalen Schritten aneinander angepasst werden.

5. Verfahren nach einem der vorhergehenden Ansprüche, **dadurch gekennzeichnet, dass** die Grenze (30) zwischen den Scanfeldern (31, 32) eine Gerade ist.

6. Verfahren nach einem der vorhergehenden Ansprüche, **dadurch gekennzeichnet, dass** die Grenze (30) zwischen den Scanfeldern (31, 32) oszilliert, falls der Vergleich der Bestrahlungszeiten oder -flächen betreffend einen jeden der Scanner (8a, 8b) keine Verschiebung der Scanfeld-Grenze (30) ergibt.

7. Verfahren nach einem der vorhergehenden Ansprüche, **dadurch gekennzeichnet, dass** ein Scanner (8a, 8b) im Scanfeld (31, 32) eines weiteren Scanners (8a, 8b) eine spannungsreduzierende Vorbelichtung eines Bestrahlungsabschnittes durchführt.

8. Verfahren nach einem der vorhergehenden Ansprüche, **dadurch gekennzeichnet, dass** die Belichtungszeiten einer Vorbelichtung ohne Einfluss auf die Scanfeldgrenzenverschiebung sind.

9. Vorrichtung zur Durchführung des Verfahrens nach einem der vorhergehenden Ansprüche, nämlich Lasersinter- oder Laserschmelzvorrichtung (1) zum Herstellen von dreidimensionalen Objekten, wobei die Vorrichtung folgende Komponenten umfasst:
- in einer Prozesskammer (2) der Vorrichtung (1) ist ein Baucontainer (3) mit einer höhenverfahrbarer Bauplattform (4) angeordnet;
über der Bauplattform (4) ist eine Beschichteranordnung (5) angeordnet, durch welche Baumaterial (6) aus einer Dosierkammer (7) im Bereich des Baucontainers (3) in Form von dünnen Schichten auftragbar ist;
- über dem Baucontainer (3) ist eine Mehrzahl von Scannern (8a, 8b) angeordnet, durch welche die Strahlung (3) einer oder mehrerer Strahlungsquellen (10) prozessgesteuert auf die Baumaterialschicht (11) lenkbar ist, um diese selektiv zu verfestigen,
wobei
eine elektronische Erfassungseinheit (20), über die die Bestrahlungszeiten bezogen für jeden einzelnen Scanner (8a, 8b) und/oder die bei einem Bestrahlungsschritt durch jeden einzelnen Scanner (8a, 8b) erfassten Bestrahlungsflächen gesondert erfasst werden und in einem elektronischen Speicher (21) abgelegt werden; Vorsehen einer elektronischen Vergleichseinrichtung (22), durch welche die abgespeicherten Bestrahlungszeitenwerte der einzelnen Scanner (8a, 8b) und/oder die Bestrahlungsflächenwerte der einzelnen Scanner (8a, 8b) miteinander vergleichbar sind;
Vorsehen einer Prozessoreinrichtung, (23) die mit dem Ausgang der Vergleichseinrichtung (22) verbunden ist und im Falle von abweichenden Bestrahlungszeitenwerten oder Bestrahlungsflächenwerten der einzelnen Scanner (8a, 8b) eine Neufestlegung der durch jeden einzelnen Scanner (8a, 8b) zu bestrahlenden Oberflächenbereiche derart berechnet, dass die Bestrahlungszeiten für jeden einzelnen Scanner (8a, 8b) möglichst aneinander angenähert sind und/oder die Bestrahlungsflächen eines jeden einzelnen Scanners (8a, 8b) flächenmäßig möglichst weit aneinander angeglichen sind, wobei
die Vorrichtung zur iterativen Durchführung des Verfahrens nach einem der vorhergehenden Ansprüche eingerichtet ist.

## Claims

1. Method for exposure control of a selective laser sintering or laser melting device for producing three-dimensional objects, comprising the following method steps:
- providing a selective laser sintering or laser melting device (1), in which three-dimensional objects can be produced by successive hardening of layers of a powdery construction material (6), hardenable by means of irradiation, at the points corresponding to the relevant cross-section of the object, wherein the provided device (1) comprises an irradiation means for irradiating layers of the construction material, which irradiation means comprises a plurality of scanners (8a, 8b) which can be actuated separately and irradiate the construction material simultaneously,
**characterised by the following method steps:**
- separate recording of the irradiation times of each individual scanner (8a, 8b) and /or the irradiation surfaces recorded by each individual scanner (8a, 8b) in a first step, and storing the recorded irradiation times and/or irradiation surfaces;
- comparing the irradiation times and/or irradiation surfaces of the individual scanners (8a, 8b) with one another;
- redetermining the surface regions of a construction material layer (11) that are to be irradiated by each individual scanner in such a way that the irradiation times for each individual scanner (8a, 8b) are brought as close together as possible and/or the irradiation surfaces of each individual scanner (8a, 8b) are matched to one another as far as possible, in terms of surface area, wherein
the method is performed iteratively.

2. Method according to claim 1, **characterised in that** the division of the scanning fields (31/32) are in each case dynamically adjusted after hardening of one or more construction material layers (11) in such a way that the exposure time for each scanner (8a, 8b), resulting during the subsequent irradiation process, is at least approximately identical.

3. Method according to either of the preceding claims, **characterised in that** an operator pre-sets the size of the scanning fields (31, 32) for each scanner before the start of the construction process, proceeding from readable control data of the scanners (8a, 8b).

4. Method according to any of the preceding claims, **characterised in that** the scanning fields (31, 32) for each scanner (8a, 8b) are adjusted to one another in incremental steps.

5. Method according to any of the preceding claims, **characterised in that** the boundary (30) between the scanning fields (31, 32) is a straight line.

6. Method according to any of the preceding claims, **characterised in that** the boundary (30) between the scanning fields (31, 32) oscillates if the comparison of the irradiation times or surfaces relating to each of the scanners (8a, 8b) does not reveal any displacement of the scanning field boundary (30).

7. Method according to any of the preceding claims, **characterised in that** a scanner (8a, 8b) carries out a voltage-reducing pre-exposure of an irradiation portion, in the scanning field (31, 32) of a further scanner (8a, 8b).

8. Method according to any of the preceding claims, **characterised in that** the exposure times of a pre-exposure do not have any influence on the scanning field boundary displacement.

9. Device for carrying out the method according to any of the preceding claims, specifically a laser sintering or laser melting device (1) for producing three-dimensional objects, wherein the device comprises the following components:
- a construction container (3), having a height-adjustable construction platform (4) is arranged in a process chamber (2) of the device (1); a coater assembly (5) is arranged above the construction platform (4), by means of which coater assembly construction material (6) can be applied from a metering chamber (7), in the region of the construction container (3), in the form of thin layers;
- a plurality of scanners (8a, 8b) is arranged above the construction container (3), by means of which scanners the radiation (3) of one or more radiation sources (10) can be deflected onto the construction material layer (11) in a process-controlled manner, in order to selectively harden said construction material layer, wherein
an electronic recording unit (20), by means of which the irradiation times relevant for each individual scanner (8a, 8b) and/or the irradiation surfaces recorded by each individual scanner (8a, 8b) during an irradiation step are recorded separately and stored in an electronic memory (21);
providing an electronic comparison means (22), by means of which the stored irradiation time values of the individual scanners (8a, 8b) and/or the irradiation surface values of the individual scanners (8a, 8b) can be compared with one another;
providing a processor means (23) which is connected to the output of the comparison means (22) and, in the case of deviating irradiation time values or irradiation surface values of the individual scanners (8a, 8b) calculates a redetermination of the surface regions to be irradiated by each individual scanner (8a, 8b) in such a way that the irradiation times for each individual scanner (8a, 8b) are brought as close together as possible and/or the irradiation surfaces of each individual scanner (8a, 8b) are matched to one another as far as possible, in terms of surface area, wherein
the device is designed to iteratively perform the method according to any of the preceding claims.

## Revendications

1. Procédé de commande d'exposition d'un dispositif de frittage laser ou de fusion laser sélectif pour la fabrication d'objets tridimensionnels, comprenant les étapes de procédé suivantes :
- la fourniture d'un dispositif de frittage laser ou de fusion laser sélectif (1), dans lequel des objets tridimensionnels peuvent être fabriqués par solidification successive de couches d'un matériau de construction pulvérulent (6) pouvant être solidifié au moyen d'un rayonnement aux emplacements correspondant à la section transversale respective de l'objet, le dispositif fourni (1) comprenant un appareil d'exposition à des rayons pour l'exposition à des rayons de couches du matériau de construction, qui présente une pluralité de scanners (8a, 8b) pouvant être commandés séparément, exposant simultanément le matériau de construction à des rayons,
**caractérisé par les étapes de procédé suivantes**
- la détection séparée des temps d'exposition à des rayons de chaque scanner individuel (8a, 8b) et/ou des surfaces d'exposition à des rayons détectées par chaque scanner individuel (8a, 8b) dans une première étape et l'enregistrement des temps d'exposition à des rayons et/ou des surfaces d'exposition à des rayons détectés ;
- la comparaison des temps d'exposition à des rayons et/ou des surfaces d'exposition à des rayons des scanners individuels (8a, 8b) entre eux ;
- la redéfinition des zones de surface d'une couche de matériau de construction (11) à exposer à des rayons par chaque scanner individuel de telle sorte que les temps d'exposition à des rayons pour chaque scanner individuel (8a, 8b) soient aussi proches que possible les uns des autres et/ou que les surfaces d'exposition à des rayons de chaque scanner individuel (8a, 8b) soient autant harmonisées que possible les unes par rapport aux autres en termes de surface,
le procédé étant réalisé de manière itérative.

2. Procédé selon la revendication 1, **caractérisé en ce que** la répartition des champs de balayage (31/32) est adaptée dynamiquement à chaque fois après la consolidation d'une ou de plusieurs couches de matériau de construction (11) de telle sorte que le temps d'exposition résultant du passage d'exposition à des rayons suivant soit au moins approximativement le même pour chaque scanner (8a, 8b).

3. Procédé selon l'une quelconque des revendications précédentes, **caractérisé en ce qu'**avant le début de l'opération de construction, un opérateur effectue un préréglage de la taille des champs de balayage (31, 32) pour chaque scanner à partir de données de commande lisibles des scanners (8a, 8b).

4. Procédé selon l'une quelconque des revendications précédentes, **caractérisé en ce que** les champs de balayage (31, 32) sont ajustés les uns aux autres pour chaque scanner (8a, 8b) par étapes incrémentielles.

5. Procédé selon l'une quelconque des revendications précédentes, **caractérisé en ce que** la limite (30) entre les champs de balayage (31, 32) est une droite.

6. Procédé selon l'une quelconque des revendications précédentes, **caractérisé en ce que** la limite (30) entre les champs de balayage (31, 32) oscille si la comparaison des temps ou des surfaces d'exposition à des rayons concernant chacun des scanners (8a, 8b) n'indique aucun déplacement de la limite (30) des champs de balayage.

7. Procédé selon l'une quelconque des revendications précédentes, **caractérisé en ce qu'**un scanner (8a, 8b) dans le champ de balayage (31, 32) d'un autre scanner (8a, 8b) réalise une préexposition réduisant la tension d'une section d'exposition à des rayons.

8. Procédé selon l'une quelconque des revendications précédentes, **caractérisé en ce que** les temps d'exposition d'une préexposition sont sans effet sur le déplacement de la limite des champs de balayage.

9. Dispositif pour la réalisation du procédé selon l'une quelconque des revendications précédentes, à savoir dispositif de frittage laser ou de fusion laser (1) pour la fabrication d'objets tridimensionnels, le dispositif comprenant les composants suivants :
- dans une chambre de processus (2) du dispositif (1) est disposé un récipient de construction (3) avec une plate-forme de construction (4) déplaçable en hauteur ;
au-dessus de la plate-forme de construction (4) est disposé un agencement de revêtement (5) par lequel du matériau de construction (6) peut être appliqué sous forme de couches minces à partir d'une chambre de dosage (7) dans la zone du récipient de construction (3) ;
- au-dessus du récipient de construction (3) est disposée une pluralité de scanners (8a, 8b), par lesquels le rayonnement (3) d'une ou de plusieurs sources de rayonnement (10) peut être dirigé sur la couche de matériau de construction (11) de manière commandée par le processus, afin de consolider celle-ci de manière sélective,
une unité de détection électronique (20), par l'intermédiaire de laquelle les temps d'exposition à des rayons rapportés à chaque scanner individuel (8a, 8b) et/ou les surfaces d'exposition à des rayons détectées par chaque scanner individuel (8a, 8b) lors d'une étape d'exposition à des rayons sont détectés séparément et sont enregistrés dans une mémoire électronique (21) ;
la prévision d'un appareil de comparaison électronique (22), par lequel les valeurs de temps d'exposition à des rayons enregistrées des scanners individuels (8a, 8b) et/ou les valeurs de surface d'exposition à des rayons des scanners individuels (8a, 8b) peuvent être comparées entre elles ;
la prévision d'un appareil de traitement (23), qui est relié à la sortie de l'appareil de comparaison (22) et qui, en cas de valeurs de temps d'exposition à des rayons ou de valeurs de surface d'exposition à des rayons différentes des scanners individuels (8a, 8b), calcule une redéfinition des zones de surface à exposer à des rayons par chaque scanner individuel (8a, 8b) de telle sorte que les temps d'exposition à des rayons pour chaque scanner individuel (8a, 8b) soient aussi proches que possible les uns des autres et/ou les surfaces d'exposition à des rayons de chaque scanner individuel (8a, 8b) soient autant harmonisées que possible les unes par rapport aux autres en termes de surface, le dispositif étant adapté pour la réalisation itérative du procédé selon l'une quelconque des revendications précédentes.
